Europäisches Patentamt

(19) European Patent Office

Office européen des brevets

(11) Veröffentlichungsnummer: **0 199 352**
**B1**

(12) **EUROPÄISCHE PATENTSCHRIFT**

(45) Veröffentlichungstag der Patentschrift:
12.10.88

(21) Anmeldenummer: 86105633.1

(22) Anmeldetag: 23.04.86

(51) Int. Cl.⁴: **B 60 T 8/44**

(54) **Bremskraftverstärker für eine hydraulische Bremsanlage eines Kraftfahrzeuges.**

(30) Priorität: 25.04.85 DE 3514907

(43) Veröffentlichungstag der Anmeldung:
29.10.86 Patentblatt 86/44

(45) Bekanntmachung des Hinweises auf die Patenterteilung:
12.10.88 Patentblatt 88/41

(84) Benannte Vertragsstaaten:
**DE FR GB IT**

(56) Entgegenhaltungen:
**DE-A-1 940 632**
**DE-A-1 941 098**
**DE-A-2 362 315**
**DE-A-3 413 430**
**DE-A-3 420 066**
**FR-A-2 565 186**
**GB-A-2 139 722**
**US-A-4 123 117**

(73) Patentinhaber: **VOLKSWAGEN AKTIENGESELLSCHAFT, D-3180 Wolfsburg (DE)**

(72) Erfinder: **Leineweber, Günter, Benzstrasse 165, D-3170 Gifhorn (DE)**

EP 0 199 352 B1

LIBER, STOCKHOLM 1988

## Beschreibung

Die Erfindung betrifft einen hydraulischen Bremskraftverstärker für eine hydraulische Kraftfahrzeug-Bremsanlage der im Oberbegriff des Patentanspruchs 1 genannten Art, wie er beispielsweise aus der DE-C-2 928 985 oder DE-C-3 023 027 bekannt ist, sowie eine damit ausgerüstete hydraulische Kraftfahrzeug-Bremsanlage mit Antiblockierregeleinrichtung.

Hydraulische Bremskraftverstärker dieser Bauart haben sich in Serienfahrzeugen vielfach bewährt. Sie besitzen u. a. den großen Vorteil, daß der Fertigungsaufwand für sie vergleichsweise gering ist, da sie - als nicht druckausgeglichene Anordnungen - mit grob tolerierten Passungen für die Verstärkerkolben/Steuerschieber-Einheit gefertigt werden konnen.

Es ist bekannt, in hydraulischen Bremsanlagen für Kraftfahrzeuge mit einer Antiblockierregeleinrichtung den Bremskraftverstärker auch im Rahmen der Antiblockierregelung als Druckmodulator einzusetzen, um in den Bremskreisen die jeweiligen Regelmaßnahmen der Antiblockierregelung, nämlich "Druckhalten", "Druckabbauen" und "Druckaufbauen" durchzuführen.

Bei einer bekannten Bremsanlage dieser Art (DE-A-3 322 786) wird ein mechanisch mit einem üblichen Tandem-Hauptbremszylinder gekoppelter bekannter Unterdruck-Bremskraftverstärker während der Antiblockierregelung je nach Regelerfordernis entweder in einen die Pedalkraft unterstützenden ersten Zustand oder in einen der Pedalkraft entgegenwirkenden zweiten Zustand umgeschaltet, wobei die Umschaltung dadurch erfolgt, daß der Unterdruck über eine Ventileinrichtung der Antiblockierregeleinrichtung entweder auf die eine oder die andere Kolbenseite des Verstärkerkolbens geschaltet wird, während gleichzeitig die andere Kolbenseite mit Atmosphärendruck beaufschlagt wird. Die Verstärkung des Bremskraftverstärkers wird also während der einzelnen Modulationsphasen der Antiblockierregelung ständig ab- und wieder zugeschaltet, wodurch es zu deutlich spürbaren Pedalrückwirkungen (Pedalwegänderungen und Pedalbeschleunigungen) kommt, die vom Fahrzeugführer oft als störend empfunden werden.

Etwa ähnliche Verhältnisse liegen bei einer anderen bekannten hydraulischen Kraftfahrzeug-Bremsanlage mit einer Antiblockierregeleinrichtung vor (DE-B-1 941 098), bei der zwischen Bremspedal und Hauptbremszylinder statt eines Unterdruck-Bremskraftverstärkers eine hydraulische Kolben/Zylinder-Anordnung vorgesehen ist, die aus mehreren in spezieller Weise miteinander zusammenwirkenden einzelnen Kolben/Zylinder-Einheiten besteht und insbesondere einen Modulatorzylinder mit einem darin axial verschiebbaren, beidseitig druckbeaufschlagbaren Modulatorkolben enthält, der mechanisch mit dem Hauptbremszylinder gekoppelt ist. Diese hydraulische Kolben/Zylinder-Anordnung übernimmt sowohl die Aufgabe eines Bremskraftverstärkers als auch die eines Druckmodulators während der Antiblockierregelung. Zu diesem Zweck kann einerseits eine Bremssteuerkammer des Modulatorzylinders über ein pedalabhängig elektromagnetisch gesteuertes Bremssteuerventil und andererseits eine Gegensteuerkammer des Modulatorzylinders über ein von der Antiblockierregeleinrichtung gesteuertes Gegensteuerventil jeweils entweder mit einer Druckquelle oder einem drucklosen Vorratsbehälter verbunden werden oder aber nach außen völlig abgesperrt werden.

Auch bei dieser bekannten hydraulischen Kraftfahrzeug-Bremsanlage wird die Verstärkung des Bremskraftverstärkers während der Antiblockierregelung ständig ab- und zugeschaltet. Trotzdem sind hier die unmittelbaren Pedalrückwirkungen relativ gering, u. a. weil der Modulatorkolben während der druckabbauenden Modulationsphasen mechanisch von seiner mit dem Bremspedal verbundenen Betätigungsstange abgekoppelt wird. Der schaltungs- und bautechnische Aufwand für diese Anordnung ist jedoch sehr hoch und basiert auf dem Einsatz serienferner Spezialbauelemente.

Bei einer weiteren bekannten hydraulischen Kraftfahrzeug-Bremsanlage dieser Art (US-A 4 123 117) wird in den Modulationsphasen die eigentliche Verstärkerfunktion des Bremskraftverstärkers dagegen nicht abgeschaltet; der Verstärkerkolben des eingesetzten hydraulischen Bremskraftverstärkers wird vielmehr bei entsprechendem Regelerfordernis (Druckabbauen) der Antiblockierregelung durch eine mechanische Federvorrichtung und durch eine an ihm zur Wirkung gebrachte Druckkraft axial gegen die Wirkung der Betätigungs- und der Verstärkerkraft verschoben. Die in den Modulationsphasen spürbaren unmittelbaren Pedalrückwirkungen bleiben dabei vergleichsweise gering.

Bei dieser bekannten hydraulischen Kraftfahrzeug-Bremsanlage können nur die Regelerfordernisse "Druckabbau" und "Druckaufbau" realisiert werden; ein "Druckhalten" ist nicht möglich.

Bei dieser bekannten hydraulischen Bremsanlage wird ebenfalls ein vergleichsweise komplizierter und fertigungstechnisch aufwendiger hydraulischer Spezialbremskraftverstärker eingesetzt.

Die eigentliche Verstärkerfunktion während des normalen Bremsbetriebes wird bei diesem durch einen von einem bremspedalbetätigten Eingangskolben hydraulisch angesteuerten besonderen Steuerkolben aktiviert. Solange das Bremspedal nicht betätigt ist, wird durch diesen Steuerkolben eine unmittelbare Leitungsverbindung zwischen einer mit einem drucklosen Reservoir verbundenen Rücklaufleitung und einer von einer Druckquelle (Pumpe) gespeisten Druckleitung hergestellt (Bypass); auch die Arbeitskammer des Bremskraftverstärkers steht während dieser Zeit - durch den Steuerkolben - unmittelbar mit dieser Rücklaufleitung in Verbindung. Bei nicht betätigtem Bremspedal herrscht im Bremskraftverstärker ein ständiger Ölumlauf, der von der Druckleitung aus zum einen unmittelbar und zum anderen über den Steuerkolben und den Eingangskolben zur Rücklaufleitung verläuft.

Um die Druckstange dieses Bremskraftverstärkers beim Regelerfordernis "Druckabbau" der Antiblockierregeleinrichtung gegen die Wirkung der Betätigungs- und Verstärkerkraft des Bremskraftverstärker axial zurückschieben zu können, ist auf der der Arbeitskammer gegenüberliegenden Kolbenseite des Verstärkerkolbens eine sogenannte Rückstellkammer angeordnet, in der eine von der Druckquelle (Pumpe) kommende zweite Druckleitung mündet. Diese zweite Druckleitung ist solange, wie das Regelerfordernis "Druckabbau" nicht vorliegt, ebenfalls über einen Bypass unmittelbar mit dem drucklosen Reservoir kurzgeschlossen; über diesen Bypass steht dann auch die Rückstellkammer mit der Rücklaufleitung unmittelbar in Verbindung. Wenn dieser Bypass während des Bremsens durch die Antiblockierregeleinrichtung beim Regelerfordernis "Druckabbau" aufgehoben wird, wird wie zuvor bereits die Arbeitskammer auch die Rückstellkammer aus der Druckquelle druckbeaufschlagt; der Verstärkerkolben kann dadurch von einer an ihm angreifenden mechanischen Federvorrichtung gegen die Wirkung der Betätigungs und Verstärkerkraft axial zurückgeschoben werden.

Aufgabe der vorliegenden Erfindung ist es demzufolge, einen bewährten, fertigungstechnisch einfachen konventionellen hydraulischen Bremskraftverstärker der im Oberbegriff des Patentanspruchs 1 genannten Art ohne wesentlichen Mehraufwand derart auszubilden, daß auch er zusätzlich zu seiner eigentlichen Verstärkerfunktion im Rahmen einer Antiblockierregeleinrichtung als Druckmodulator verwendet werden kann, und zwar derart, daß nicht nur die beiden Regelerfordernisse "Druckabbauen" und "Druckaufbauen", sondern auch das Regelerfordernis "Druckhalten" realisiert werden kann und in den einzelnen Modulationsphasen der Antiblockierregelung möglichst geringe Pedalrückwirkungen (Pedalwegänderung, Pedalbeschleunigung) auftreten.

Diese Aufgabe wird erfindungsgemäß durch die Merkmale des Patentanspruchs 1 gelöst. Vorteilhafte Weiterbildungen und Ausgestaltungen der Erfindung sind in den Unteransprüchen angegeben.

Erfindungsgemäß ist also die Druckstange oder der Verstärkerkolben mit einem Stellkolben verbunden, der von der Rücklaufkammer des Bremskraftverstärkers eine einen Steuerleitungsanschluß aufweisende Teilkammer abtrennt und durch dessen Aktivierung der Verstärkerkolben und die auf den Hauptbremszylinder einwirkende Druckstange des Bremskraftverstärkers entgegen der Verstärkerkraft und der Betätigungskraft axial verschiebbar ist, um so den vom nachgeschalteten Hauptbremszylinder abgegebenen Bremsdruck dem Regelerfordernis der Antiblockierregelung entsprechend abzubauen.

Die Verstärkung des Bremskraftverstärkers wird dabei in den einzelnen Modulationsphasen der Antiblockierregelung ebenfalls nicht ständig ab- und wieder zugeschaltet; sie bleibt vielmehr entsprechend der durch die Pedalbetätigung bewirkten Relativverschiebung zwischen dem Verstärkerkolben und dem Steuerschieber erhalten. Das wirkt sich besonders positiv auf die Pedalrückwirkungen aus, da dann nämlich auch der vom Bremspedal betätigte Steuerschieber immer hydraulisch aktiv bleibt, so daß sich dessen zum vollständigen Öffnen der hydraulischen Durchlässe vorgesehenen relativ großen Leerwege bezüglich der Pedalrückwirkungen nicht auswirken können.

Bei hydraulischen Bremskraftverstärkern der im Oberbegriff des Patentanspruchs 1 genannten Art ist zwar die positive Überdeckung, d. h. der benötigte Stellweg für die hydraulische Aktivierung des Steuerschiebers, sehr gering, die dem Steuerschieber zugestandenen Leerwege zum vollständigen Öffnen der hydraulischen Durchlässe sind dagegen sehr groß. Würde die Verstärkung des hydraulischen Verstärkers in den einzelnen Modulationsphasen ständig ab- und wieder zugeschaltet werden, würden sich am Bremspedal nicht nur die bei der Modulation auftretenden Wege des Hauptbremszylinders, sondern additiv auch diese vergleichsweise großen Leerwege des Steuerschiebers auswirken, wobei zu berücksichtigen ist, daß die am Fuß des Fahrzeuglenkers spürbare Reaktion sich noch dadurch verstärkt, daß auch der Leerweg mit der Pedalübersetzung multipliziert wird.

Anhand einiger in der Zeichnung zum Teil schematisch dargestellter Ausführungsbeispiele wird die Erfindung nachstehend näher erläutert.

In der Zeichnung zeigen

Fig. 1    den Längsschnitt durch einen mit einem Tandem-Hauptbremszylinder gekoppelten Bremskraftverstärker sowie einen Ausschnitt aus einer hydraulischen Kraftfahrzeug-Bremsanlage mit Antiblockierregeleinrichtung,

Fig. 2    die gleiche Hauptbremszylinder-Bremskraftverstärker-Anordnung innerhalb einer im Detail abgewandelten hydraulischen Bremsanlage,

Fig. 3 die gleiche Hauptbremszylinder-
Bremskraftverstärker-Anordnung mit
einer in einem weiteren Detail
abgewandelten hydraulischen
Bremsanlage und

Fig. 4 ein vergleichendes Zeitdiagramm.

In den Figuren der Zeichnung sind lediglich die Bauelemente einer hydraulischen Kraftfahrzeug-Bremsanlage mit Antiblockierregeleinrichtung dargestellt, die für das Verständnis der Erfindung notwendig sind. Nicht dargestellt sind somit insbesondere z. B. das Bremspedal, der Ausgleichsbehälter des Hauptbremszylinders, die einzelnen Radbremszylinder, die Sensoren zur Erfassung der Drehgeschwindigkeits- und/oder Drehverzögerungswerte der Fahrzeugräder sowie die eigentliche elektronische Steuer- und Regeleinrichtung der Antiblockierregeleinrichtung.

In den Ausführungsbeispielen sind ein Hauptbremszylinder 2 in Form eines Tandem-Bremszylinders und ein hydraulischer Bremskraftverstärker 1 in üblicher Weise axial miteinander verbunden, wobei der Bremskraftverstärker über eine Druckstange 3 mechanisch auf den Hauptbremszylinder 2 einwirkt.

Bezüglich seiner allgemeinen Verstärkereigenschaften entspricht dieser hydraulische Bremskraftverstärker in seinem Innenaufbau üblichen hydraulischen Bremskraftverstärkern, wie sie beispielsweise aus den DE-PS-2 928 985 oder 3 023 027 bekannt sind. Unter anderem enthält er einen axial verschiebbar im Ventilgehäuse 11 geführten Verstärkerkolben 12 und einen in einer sacklochförmigen Axialbohrung des Verstärkerkolbens axial verschieblich gelagerten Steuerschieber 13. Durch die Verschiebung des Steuerschiebers innerhalb des Verstärkerkolbens mittels der mit dem nicht weiter dargestellten Bremspedal verbundenen Betätigungsstange 4 wird eine von der steuerschieberseitigen Stirnfläche des Verstärkerkolbens begrenzte Arbeitskammer 14, deren Raumvolumen in der dargestellten Ruhestellung des Bremskraftverstärkers ihr Minimum hat, über nicht weiter bezifferte axiale und radiale Durchlässe im Steuerschieber sowie im Verstärkerkolben je nach der relativen Stellung des Steuerschiebers zum Verstärkerkolben entweder mit einer Druckkammer 15, in der ein Druckleitungsanschluß 17.1 mündet, oder mit einer Rücklaufkammer, in der ein Rücklaufleitungsanschluß 17.2 mündet, verbunden.

Abweichend von herkömmlichen hydraulischen Bremskraftverstärkern ist mit der sich axial durch die Rücklaufkammer erstreckenden Druckstange 3 oder dem Verstärkerkolben 12 ein Krafterzeugungsglied in Form eines Stellkolbens 18 verbunden, der die Rücklaufkammer in eine vom Verstärkerkolben 12 begrenzte erste Teilkammer 16.1 mit dem Rücklaufleitungsanschluß 17.2 und eine axial benachbarte zweite Teilkammer 16.2 unterteilt. Auch diese zweite Teilkammer 16.2 ist mit einem Leitungsanschluß, nämlich dem Steuerleitungsanschluß 17.3 ausgestattet.

Während die erste Teilkammer 16.1 in üblicher Weise als Rücklaufkammer dient, findet die zweite Teilkammer 16.2 als Steuerkammer Verwendung, über die der hydraulische Bremskraftverstärker im Rahmen einer Antiblockierregelung zur Druckmodulation herangezogen werden kann.

Die Versorgung des hydraulischen Bremskraftverstärkers 1 mit Druckmedium erfolgt durch eine Druckmediumversorgung 9, die eine Pumpe 9.1 mit nachgeschaltetem Druckspeicher 9.2 sowie einen drucklosen Vorratsbehälter 9.3 enthält. In üblicher Weise ist der Druckleitungsanschluß 17.1 mit der Druckquelle, d. h. also mit der Pumpe 9.1 bzw. dem Druckspeicher 9.2, und der Rücklaufleitungsanschluß 17.2 mit dem drucklosen Vorratsbehälter 9.3 verbunden. Der Steuerleitungsanschluß 17.3 ist mit der Druckmediumversorgung 9 dagegen nicht unmittelbar, sondern unter Zwischenschaltung einer ersten Ventileinheit 5 verbunden, die Teil der Antiblockierregeleinrichtung ist.

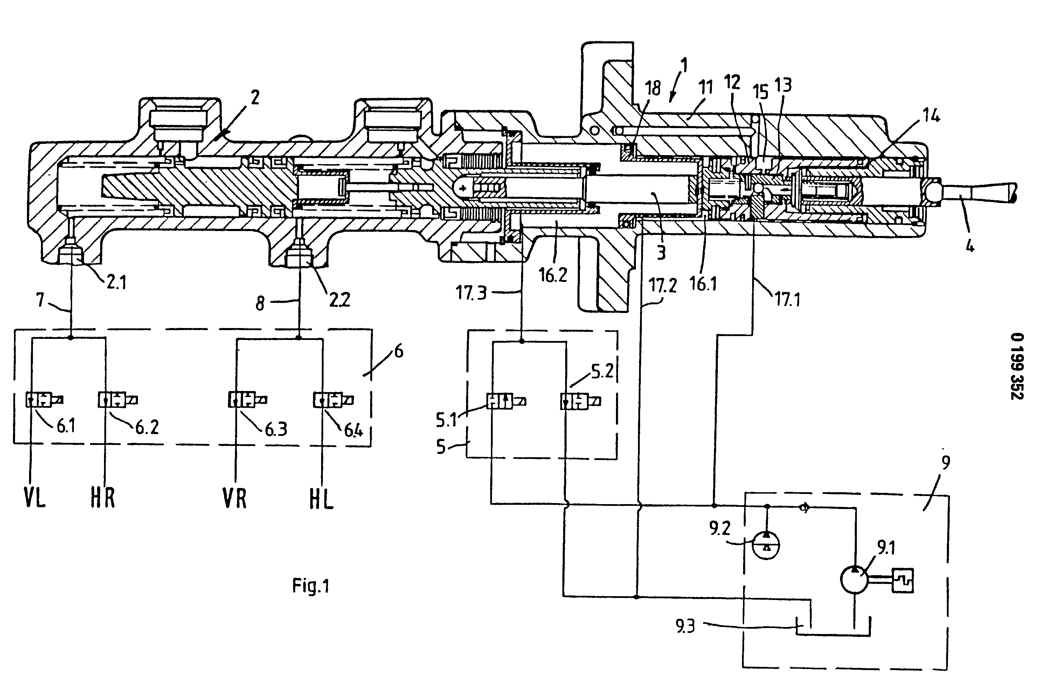

Diese Ventileinheit enthält im Ausführungsbeispiel gemäß Fig. 1 ein Sperrventil 5.2 und ein Öffnungsventil 5.1. Über das Öffnungsventil ist der Steuerleitungsanschluß 17.3 mit einer Druckquelle, hier mit der Pumpe 9.1 bzw. dem Druckspeicher 9.2, und über das Sperrventil 5.2 mit dem drucklosen Vorratsbehälter 9.3 verbunden. Im Normalbetrieb der Bremsanlage, d. h. solange, wie die Antiblockierregelung noch nicht einsetzt, nehmen diese Ventile 5.1 und 5.2 ihre dargestellte Schaltstellung ein, d. h. es besteht eine leitungsmäßige Verbindung zwischen der zweiten Teilkammer 16.2 und dem drucklosen Vorratsbehälter 9.3. Es ist leicht erkennbar, daß demzufolge der hydraulische Bremskraftverstärker 1 im Normalbetrieb der Bremsanlage, d. h. in den Betriebsphasen, in denen keine Antiblockierregelung stattfindet, wie üblich arbeitet.

Bei Einsetzen der Antiblockierregelung infolge erfaßter Blockiergefahr wird der hydraulische Bremskraftverstärker 1 jedoch in einfacher Weise durch geeignete Umsteuerung der beiden Ventile 5.1 und 5.2 der ersten Ventileinheit 5 als Druckmodulator für die Antiblockierregelung aktiviert. Es ist leicht erkennbar, daß durch Schließen des Sperrventils 5.2 und Öffnen des Öffnungsventils 5.1 die der zweiten Teilkammer 16.2 zugewandte Fläche des Stellkolbens 18 mit dem von der Druckquelle, d. h. der Pumpe 9.1 bzw. dem Druckspeicher 9.2 gelieferten Druck beaufschlagt wird, wodurch an der Druckstange 3 und dem Verstärkerkolben 12 eine Kraft zur Wirkung gebracht wird, die der von der Betätigungsvorrichtung 4 aufgebrachten Betätigungskraft sowie der durch die Steuerschieberaussteuerung bewirkten Verstärkerkraft des Verstärkerkolbens 12 entgegengerichtet ist. Die der zweiten Teilkammer 16.2 zugewandte wirksame Fläche des Stellkolbens 18 ist nun so bemessen, daß die von ihm entwickelte Gegenkraft dann, wenn die zweite Teilkammer 16.2 wie die Arbeitskammer 14 von der Pumpe 9.1 bzw. dem Druckspeicher 9.2 mit dem (Servo-)Systemdruck beaufschlagt wird, größer ist als die Summe der von der Betätigungsvorrichtung 4 ausgeübten Betätigungskraft und der aufgrund der Steuerschieberaussteuerung vom Verstärkerkolben 12 gelieferten Verstärkerkraft.

Durch diese Bemessung ist es möglich, die von der Antiblockierregelung jeweils vorgegebenen Regelerfordernisse "Druckabbau" durch Schließen des Sperrventils 5.2 und Öffnen des Öffnungsventils 5.1, "Druckhalten" durch Schließen des Sperrventils 5.2 (Öffnungsventil 5.1 bleibt geschlossen) und "Druckaufbau" durch erneutes Schließen des Öffnungsventils 5.1 und Öffnen des Sperrventils 5.2 zu realisieren. In der Modulationsphase "Druckabbau" wird also der Verstärkerkolben 12 durch die von Stellkolben 18 ausgeübte Gegenkraft zurückgedrückt, was eine entsprechende Entlastung des Hauptbremszylinders bedeutet, in der Modulationsphase "Druckhalten" infolge der Absperrung der zweiten Teilkammer 16.2 in seiner gerade eingenommenen Axialposition derart festgehalten, daß er nicht in Richtung eines Druckaufbaus verschiebbar ist, und in der Modulationsphase "Druckaufbau" kommt seine Verstärkerkraft wieder druckaufbauend voll zur Wirkung.

Um den hydraulischen Bremskraftverstärker 1 in der gewünschten Weise als Druckmodulator einzusetzen, muß die zweite Teilkammer 16.2 natürlich nicht zwingend aus der gleichen Druckmediumversorgung 9 versorgt werden, wie der eigentliche Bremskraftverstärker. Erforderlichenfalls kann natürlich auch eine davon getrennte Druckquelle mit davon verschiedener Druckhöhe eingesetzt werden, z. B. dann, wenn die vorhandenen räumlichen Verhältnisse es nicht ermöglichen, die in der zweiten Teilkammer 16.2 wirksame Fläche des Stellkolbens 18 für den vorhandenden Systemdruck ausreichend groß zu machen.

Eine sweite Ventileinheit 6 der Antiblockierregeleinrichtung mit den Sperrventilen 6.1 bis 6.4 ist in den von den Auslässen 2.1 und 2.2 des Hauptbremszylinders 2 gespeisten beiden Bremskreisen 7 und 8 angeordnet. Diese Sperrventile sind jeweils in den zu den einzelnen Fahrzeugrädern VL, HR, VR und HL führenden Bremsleitungen angeordnet und werden von der elektronischen Steuer- und Regeleinrichtung der Antiblockierregeleinrichtung je nach dem μ-Verhältnis der Fahrbahn separat gesteuert.

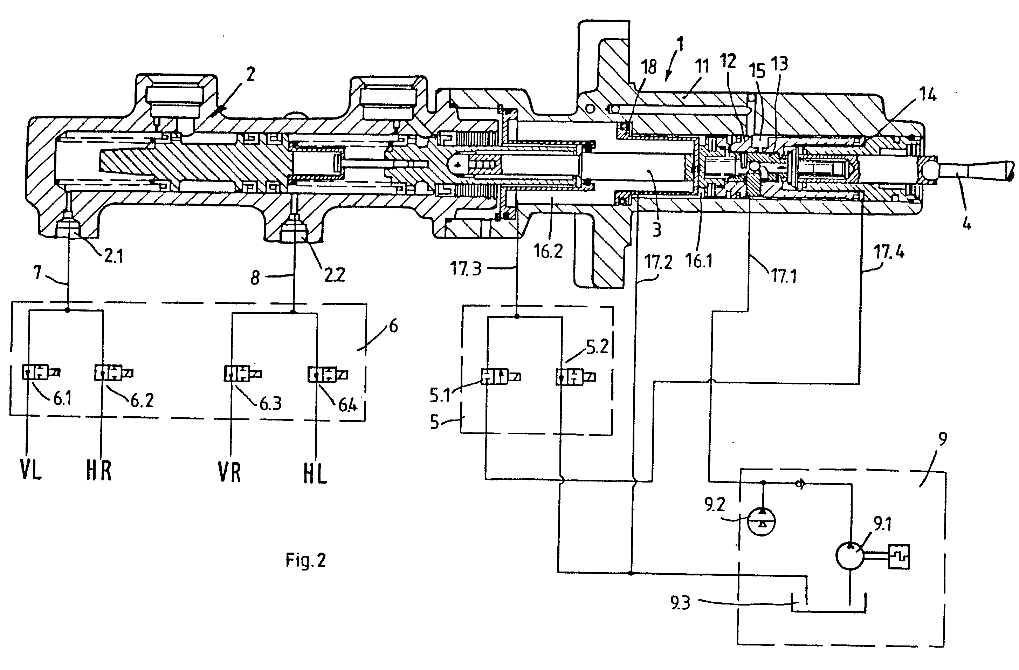

Eine weitere Verringerung der Pedalrückwirkungen während der Modulationsphasen wird in vorteilhafter Weise erzielt, wenn - wie im Ausführungsbeispiel gemäß Fig. 2 dargestellt - der Steuerleitungsanschluß 17.3 während des Regelerfordernisses "Druckabbau" nicht wie im Ausführungsbeispiel gemäß Fig. 1 mit dem von der Druckmediumversorgung 9 erzeugten Druck unmittelbar beaufschlagt wird, sondern mit dem in der Arbeitskammer 14 herrschenden modulierten Druck. Demzufolge ist der Steuerleitungsanschluß 17.3 - über das Öffnungsventil 5.1 der ersten Ventileinheit 5 - nicht mit der Druckmediumversorgung 9, sondern mit einem Anschluß 17.4 der Arbeitskammer 14 verbindbar. Durch diese Schaltungsvariante wird bewirkt, daß der auch beim Ausführungsbeispiel gemäß Fig. 1 aktiv gehaltene Steuerschieber 13 während der Modulationsphasen nicht mehr zwischen den Steuerkanten der nicht weiter bezifferten Druck(Einlaß)- und Rücklauf(Auslaß)-Steuerdurchlässe hin- und herfahren muß, sondern nur noch den Druck(Einlaß)-Steuerdurchlaß öffnen und schließen muß.

Der Steuerschieber 13 öffnet hierbei während der Regelerfordernisse "Druckaufbau" und "Druckabbau" immer den Druck(Einlaß)-Steuerdurchlaß, lediglich während des Regelerfordernisses "Druckhalten" wird dieser Steuerdurchlaß geschlossen.

Ein weiterer Vorteil dieser Schaltungsvariante ist darin zu sehen, daß bei geringer Verstärkerbetätigung auch jeweils nur eine geringe Rückstellkraft erzeugt wird, da ja immer nur der Druck für die Rückstellung eingespeist wird, der über das Bremspedal vorgegeben ist. Der Kraftüberschuß für die Rückstellung wird nur durch das Flächenverhältnis erreicht. Auf diese Weise ergibt sich für den Fahrzeugführer während der Modulationsphasen der Antiblockierregelung eine zuordenbare Pedalreaktion. Tritt er während dieser Phase kräftig auf das Bremspedal, dann ergibt sich eine kraftvolle Pedalreaktion. Tritt er dagegen mit geringer Kraft auf das Bremspedal, dann ergibt sich eine entsprechend geringere Pedalreaktion.

In der dargestellten hydraulischen Bremsanlage mit Antiblockierregeleinrichtung steht für die im Rahmen der Antiblockierregelung durchzuführenden Druckmodulation für die Bremsen der Fahrzeugräder - im Ausführungsbeispiel vier Räder - nur der Bremskraftverstärker 1 allein als Druckmodulator zur Verfügung. Die an den einzelnen Rädern erforderlichen Bremsdruckänderungen können daher vom Bremskraftverstärker grundsäztlich nur nacheinander durchgeführt werden, was mit entsprechenden Stellwegen verbunden ist, die am Bremspedal spürbar sind.

Um diese Pedalrückwirkungen noch weiter zu verringern, ist es von Vorteil, wenn die nicht weiter dargestellte elektronische Steuer- und Regeleinrichtung der Antiblockierregeleinrichtung derart ausgebildet wird, daß dann, wenn für einen Teil der Fahrzeugräder das Regelerforderns "Druckabbau" und gleichzeitig für einen einen anderen Teil der Räder das Regelerfordernis "Druckaufbau" auftritt, nicht sofort der Bremskraftverstärker 1 als Druckmodulator aktiviert wird, sondern zunächst intern ein Druckausgleich in den entsprechenden Teilen der Bremsanlage herbeigeführt wird, indem zunächst die diesen Rädern zugeordneten Sperrventile 6.1 bis 6.4 der zweiten Ventileinheit 6 der Antiblockierregeleinrichtung solange in ihren Durchlaßzustand geschaltet werden, bis entweder ein Druckausgleich herbeigeführt oder aber das Regelerfordernis "Druckabbau" fortgefallen ist; erst danach wird den ggf. fortbestehenden Regelerfordernissen entsprechend zur Aktivierung des Bremskraftverstärkers 1 als Druckmodulator die erste Ventileinheit 5 umgeschaltet, wobei gleichzeitig natürlich auch ein Teil der Sperrventile der zweiten Ventileinheit 6 wieder umgeschaltet wird.

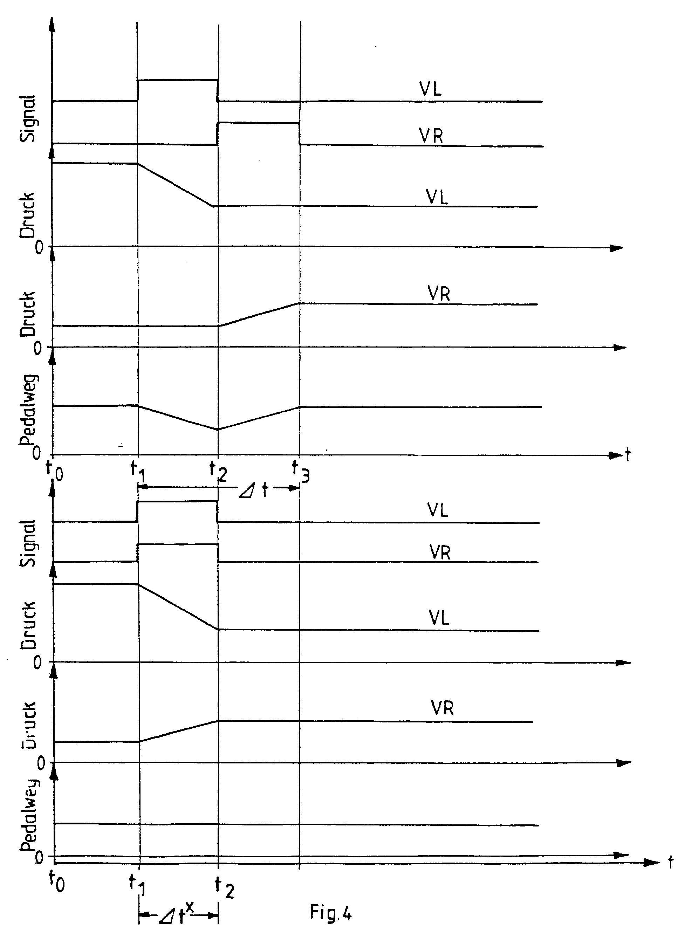

In Fig. 4 ist zur Verdeutlichung dieser Verhältnisse der zeitliche Regelablauf während einer Modulationsphase beispielhaft dargestellt, wobei im oberen Teil der Figur die Verhältnisse angedeutet sind, die vorliegen, wenn der Bremskraftverstärker 1 jedesmal, wenn eine Bremsdruckänderung verlangt wird, als Druckmodulator angesteuert wird, während im unteren Teil der Figur die Verhältnisse dargestellt sind, die sich ergeben, wenn zunächst ein interner Druckausgleich zwischen den betroffenen Rädern stattfindet. Für den beispielhaften Vergleich wurde eine Situation angenommen, bei der zum Zeitpunkt $t_0$ das vordere linke Rad VL mit einem hohen Druckniveau abgebremst wird, während das vordere rechte Rad VR mit einem vergleichsweise niedrigen Bremsdruck abgebremst wird und daß sich zum Zeitpunkt $t_1$ für das linke Vorderrad VL das Regelerfordernis "Druckabbau" und gleichzeitig für das rechte Vorderrad VR das Regelerfordernis "Druckaufbau" ergibt.

Im Hinblick darauf, daß der Fahrstabilität die Priorität vor dem kürzest möglichen Bremsweg eingeräumt wird, wird im oben dargestellten Regelungsablauf somit von der Antiblockierregeleinrichtung ein Signal VL abgegeben, durch welches einerseits für das dem linken Vorderrad zugeordnete Sperrventil 6.1 der zweiten Ventileinheit 6 der Durchlaßzustand eingestellt oder aufrechterhalten wird und andererseits das Öffnungsventil 5.1 der ersten Ventileinheit 5 in seinen Durchlaß und das bzw. die Sperrventile 5.2 bzw. 5.2.1 in den Sperrzustand geschaltet werden. Der Bremsdruck im Radbremszylinder des linken Vorderrades wird somit solange verringert, bis z. B. zum Zeitpunkt $t_2$ das Regelerfordernis "Druckabbau" für das linke Vorderrad fortgefallen ist. Danach wird entsprechend dem Regelerfordernis "Druckaufbau" für das rechte Vorderrad VR durch ein von der Antiblockierregeleinrichtung geliefertes Signal VR einerseits das dem rechten Vorderrad zugeordnete Sperrventil 6.3 der zweiten Ventileinheit 6 in den Durchlaßzustand geschaltet und andererseits die Ventile der ersten Ventileinheit 5 wieder in den in den Ausführungsbeispielen dargestellten Zustand versetzt bis zum Beispiel zum Zeitpunkt $t_3$ auch das Regelerfordernis "Druckaufbau" für das rechte Vorderrad wieder weggefallen ist. Man erkennt, daß für diese skizzierte Modulationsphase die Zeit $\Delta t$ vergeht und daß der Pedalweg hierbei eine gewisse Änderung erfährt, indem das Bremspedal zunächst weiter zurückgedrückt wird, ehe es wieder in Richtung der ursprünglichen Position wandert.

Wenn demgegenüber zunächst der vorgeschlagene interne Druckausgleich durchgeführt wird, wird zunächst aufgrund der zum Zeitpunkt $t_1$ von der Antiblockierregeleinrichtung gelieferten Signale VL und VR das dem linken Vorderrad VL zugeordnete Sperrventil 6.1 sowie das dem rechten Vorderrad VR zugeordnete Sperrventil 6.3 der zweiten Ventileinheit 6 in den in den Figuren dargestellten Durchlaßzustand geschaltet, wodurch die am rechten und am linken Vorderrad wirkenden Bremsdrücke sich über den nicht weiter bezifferten Schwimmkolben des Hauptbremszylinders 2 ausgleichen und demzufolge der Bremsdruck des linken Vorderrades VL absinkt und gleichzeitig der Bremsdruck des rechten Vorderrrades VR ansteigt. Im skizzierten prinzipienhaften Beispiel ist angenommen, daß der Druckausgleich zum Zeitpunkt $t_2$ vorliegt und daß bei den dann erreichten Bremsdrücken für das linke sowie das rechte Vorderrad VL bzw. VR auch gerade die Regelerfordernisse "Druckabbau" bzw. "Druckaufbau" fortfallen. Man erkennt, daß das hohe Druckniveau des linken Vorderrades VL benutzt wird, das niedrigere Druckniveau des rechten Vorderrades VR anzuheben. Sollte abweichend von der prinzipienhaften Darstellung bei erfolgtem Druckausgleich für die beiden Räder noch nicht das von der Antiblockierregeleinrichtung geforderte Druckniveau erreicht sein, dann würde anschließend der Bremskraftverstärker 1 durch die Antiblockierregeleinrichtung durch Umschaltung der Ventile der ersten Ventileinheit 5 in der vorbeschriebenen Weise als Druckmodulator aktiviert werden und erforderlichenfalls zunächst der Bremsdruck für das linke Vorderrad VL weiter abgesenkt und anschließend erforderlichenfalls der Bremsdruck für das rechte Vorderrad VR weiter angehoben werden. Da das Ausgangsdruckniveau dann jedoch den geforderten Bremsdrücken sehr viel näher ist, würde sich dabei für das Bremspedal kaum noch eine Wegänderung ergeben. Insgesamt ergibt sich eine spürbar schnellere Regelung und eine komforterhöhende geringere Pedalrückwirkung.

Für hydraulische Kraftfahrzeug-Bremsanlagen mit Antiblockierregeleinrichtung ist es wichtig, daß die generelle Funktionsfähigkeit der Bremsanlage auch dann erhalten bleibt, wenn die Antiblockierregeleinrichtung oder Teile davon ausfällt. Bei einer Bremsanlage der dargestellten Art muß daher u. a. sichergestellt sein, daß bei einem Ausfall der Antiblockierregeleinrichtung das in der zweiten Teilkammer 16.2 befindliche Druckmedium nicht etwa durch versperrte Ventile der ersten Ventileinheit 5 am Abfließen in den drucklosen Vorratsbehälter 9.3 gehindert wird; in einem solchen Falle wäre es nämlich nicht mehr möglich, den Tandem-Hauptbremszylinder zu betätigen.

Grundsätzlich wäre es möglich, die relevanten Ventile bei Inbetriebnahme des Kraftfahrzeugs durch Aktivierung einer Prüfanordnung auf ihre Funktionstüchtigkeit hin zu überprüfen.

Die vorliegende Bremsanlage und die benutzte Druckmediumversorgung ermöglicht jedoch eine besonders einfach Überwachung der Funktionstüchtigkeit der Sperrventilfunktion der ersten Ventileinheit 5.

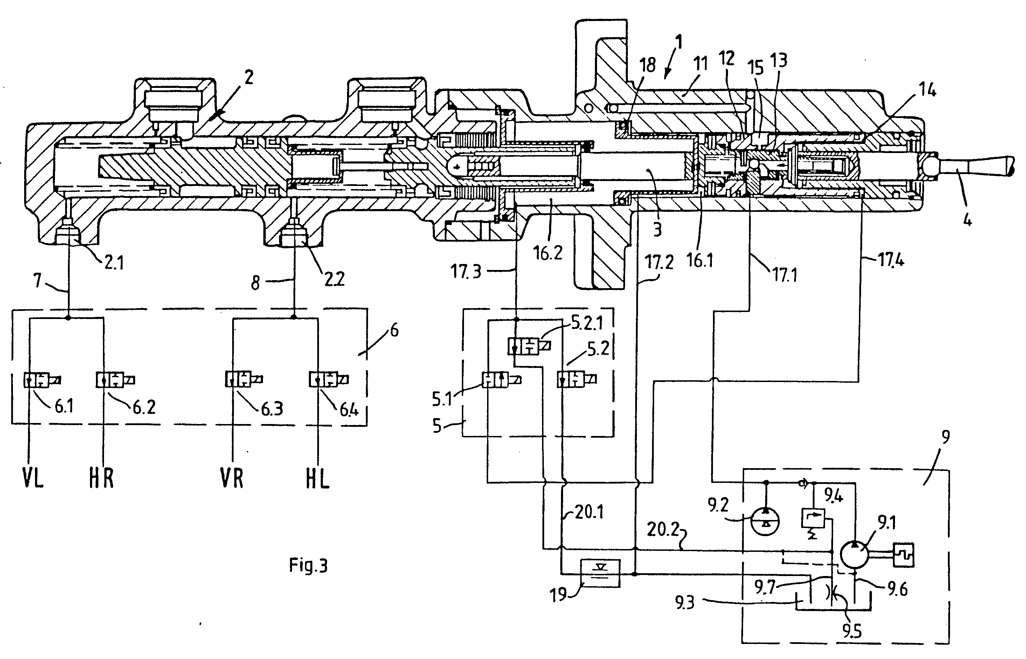

Im Ausführungsbeispiel gemäß Fig. 3 sind für die Sperrventilfunktion der ersten Ventileinheit 5 zwei Sperrventile 5.2 und 5.2.1 vorgesehen, die quasi parallel zueinander wirken. Über diese nur beim Regelerfordernis "Druckabbau" gesperrten, ansonsten jedoch durchlässigen Sperrventile steht der Steuerleitungsanschluß 17.3 des Bremskraftverstärkers 1 mit dem drucklosen Vorratsbehälter 9.3 der Druckmediumversorgung 9 in Verbindung. In der zum drucklosen Vorratsbehälter führenden Rücklaufleitung 20.1 des einen der beiden Sperrventile ist ein Durchflußsensor 19 angeordnet. Die Rücklaufleitung 20.2 des anderen der beiden Sperrventile kann - wie gestrichelt angedeutet - mit einem im drucklosen Vorratsbehälter 9.3 mündenden Sauganschluß 9.6 der Pumpe 9.1 verbunden sein. In den Fällen, in denen der Pumpe 9.1 ein Überdruckventil 9.4 parallelgeschaltet ist, ist es aber auch möglich, in der in den drucklosen Vorratsbehälter mündenden Rücklaufleitung 9.7 dieses Überdruckventils eine Drosselstelle 9.5 vorzusehen und die vorerwähnte Rücklaufleitung 20.2 des Sperrventils 5.2.1 an der Rücklaufleitung 9.7 des Überdruckventils anzuschließen und zwar zwischen der Drosselstelle 9.5 und dem Überdruckventil 9.4. Die Drosselstelle 9.5 kann dabei so bemessen sein, daß sie in der Rücklaufleitung 9.7 eine geringe Druckerhöhung von z. B. 0,5 bar erzeugt. Durch die Drosselstelle 9.5 wird somit bewirkt, daß ein Teil des über das Überdruckventil 9.4 in den drucklosen Behälter 93 fließenden Druckmediums abgezweigt wird und - sofern im Durchlaßzustand befindlich - über die Sperrventile 5.2.1 und 5.2 in den Vorratsbehälter fließt, wobei der Durchflußsensor 19 passiert werden muß. Wenn auch nur eines der beiden Sperrventile 5.2 bzw. 5.2.1 während dieser Zeit infolge eines Defektes o. ä. gesperrt ist, wird dies vom Durchflußsensor 19 sofort signalisiert, so daß es ausgetauscht werden kann. Festzuhalten ist hierbei, daß dann, wenn nur eines der beiden parallel wirkenden Sperrventile infolge eines Defektes verschlossen ist, die Funktionsfähigkeit des Bremskraftverstärkers respektive der Antiblockierregeleinrichtung noch nicht beeinträchtigt ist.

Wenn die Rücklaufleitung 20.2 - wie gestrichelt angedeutet - nicht mit der Rücklaufleitung 9.7 des Überdruckventils 9.4, sondern mit der Saugleitung bzw. dem Sauganschluß 9.6 der Pumpe verbunden ist, dann findet ebenfalls eine entsprechende Überprüfung der Sperrventile 5.2 und 5.2.1 statt. In diesem Falle saugt die Pumpe 9.1 nämlich nicht nur über ihren Sauganschluß, sondern gleichzeitig auch über den Durchflußsensor 19, die Rücklaufleitung 20.1, die beiden - im Durchlaßzustand befindlichen Sperrventile 5.2.1 und 5.2 sowie die Rücklaufleitung 20.2 Druckmedium an. Auch hierbei wird dann, wenn auch nur eines dieser beiden Sperrventile regelwidrig verschlossen ist über den Durchflußsensor 19 sofort ein entsprechendes Warnsignal abgegeben.

Der Durchflußsensor kann sehr einfach aufgebaut sein, da er lediglich eine "Schwarz-Weiß-Funktion" erfüllen muß. Es sind beispielsweise sogenannte NTC- bzw. PTC-Widerstände, d. h. Widerstände mit einem negativen bzw. positiven Temperaturkoeffizienten durchaus geeignet.

In den gezeigten Ausführungsbeispielen gemäß den Figuren 1 und 2 besteht die erste Ventileinheit 5 aus zwei 2/2-Wegeventilen. Es ist natürlich auch möglich statt dessen ein 3/3-Wegeventil einzusetzen.

**Patentansprüche**

1. Hydraulischer Bremskraftverstärker für eine hydraulische Kraftfahrzeug-Bremsanlage, mit einem axial verschiebbar in einer Bohrung eines Ventilgehäuses (11) geführten Verstärkerkolben (12), dessen Verstärkerkraft über eine an ihm angreifende Druckstange (3) auf einen nachgeschalteten Hauptbremszylinder (2) übertragbar ist, und mit einem darin axial verschiebbar gelagerten Steuerglied (Steuerschieber 13), durch dessen mittels einer Betätigungsvorrichtung (4) bewirkte relative Axialverschiebung eine Arbeitskammer (14) des Bremskraftverstärkers (1) über axiale und radiale Durchlässe im Steuerglied (13) und/oder Verstärkerkolben (12) entweder mit einem in einer Druckkammer (15) mündenden Druckleitungsanschluß (17.1) oder mit einem in einer Rücklaufkammer mündenden Rücklaufleitungsanschluß (17.2) verbindbar ist, wobei die am Verstärkerkolben (12) angreifende Druckstange (3) sich axial durch die Rücklaufkammer erstreckt, dadurch gekennzeichnet, daß mit der Druckstange (3) oder mit dem Verstärkerkolben (12) ein Stellkolben (18) verbunden ist, der die Rücklaufkammer in eine vom Verstärkerkolben (12) begrenzte erste Teilkammer (16.1) mit dem Rücklaufleitungsanschluß (17.2) und in eine axial benachbarte zweite Teilkammer (16.2) mit einem Steuerleitungsanschluß (17.3) unterteilt,

und daß der Stellkolben (18) derart ausgebildet und bemessen ist, daß die Druckstange (3) axial gegen die Wirkung der Betätigungskraft sowie der Verstärkerkraft verschiebbar ist, wenn die zweite Teilkammer (16.2) über den Steuerleitungsanschluß (17.3) mit einem Druck geeigneter Höhe beaufschlagt ist.

2. Hydraulischer Bremskraftverstärker nach Anspruch 1,

dadurch gekennzeichnet, daß die Druckstange (3) gegen die Wirkung der Betätigungskraft sowie der Verstärkerkraft axial verschiebbar ist, wenn die zweite Teilkammer (16.2) wie die Arbeitskammer (14) mit (Servo-)Systemdruck beaufschlagt ist.

3. Hydraulische Kraftfahrzeug-Bremsanlage mit Antiblockierregeleinrichtung, mit einem im Rahmen der Antiblockierregelung als Druckmodulator verwendeten hydraulischen Bremskraftverstärker (1) nach einem der Ansprüche 1 oder 2, dadurch gekennzeichnet, daß der Steuerleitungsanschluß (17.3) mittels einer ersten Ventileinheit (5) der Antiblockierregeleinrichtung den Regelerfordernissen der Antiblockierregelung entsprechend je nach Bedarf entweder - den Bremsdruck haltend - völlig absperrbar ist, oder - den Bremsdruck abbauend - mit einer Druckquelle (Pumpe 9.1, Druckspeicher 9.2) oder - den Bremsdruck wiederaufbauend - mit einem drucklosen Vorratsbehälter (9.3) der Druckmediumversorgung (9) für den Bremskraftverstärker (1) verbindbar ist.

4. Hydraulische Kraftfahrzeug-Bremsanlage nach Anspruch 3,

dadurch gekennzeichnet, daß der Steuerleitungsanschluß (17.3) beim Regelerfordernis "Druckabbau" mittels der ersten Ventileinheit (5) mit der Arbeitskammer (14) verbindbar ist.

5. Hydraulische Kraftfahrzeug-Bremsanlage nach Anspruch 3 oder 4, mit je einem in den vom Hauptbremszylinder (2) zu den einzelnen Fahrzeugrädern VL, HR, VR und HL führenden Bremsleitungen angeordneten Sperrventil (6.1 bis 6.4) einer zweiten Ventileinheit (6) der Antiblockierregeleinrichtung,

dadurch gekennzeichnet, daß dann, wenn für einen Teil der Räder das Regelerfordernis "Druckabbau" und gleichzeitig für einen anderen Teil der Räder das Regelerfordernis "Druckaufbau" auftritt, zunächst die diesen Rädern zugeordneten Sperrventile der zweiten Ventileinheit (6) solange in ihren Durchlaßzustand schaltbar sind, bis entweder ein Druckausgleich herbeigeführt oder das Regelerfordernis "Druckabbau" fortgefallen ist, und erst danach die erste Ventileinheit (5) den ggf. fortbestehenden Regelerfordernissen entsprechend umschaltbar ist.

6. Hydraulische Kraftfahrzeug-Bremsanlage nach einem der Ansprüche 3 bis 5,

dadurch gekennzeichnet, daß die mit dem Steuerleitungsanschluß (17.3) verbundene erste Ventileinheit (5) u. a. zwei nur beim Regelerfordernis "Druckabbau" gesperrte, ansonsten durchlässige Sperrventile (5.2; 5.2.1) aufweist, über welche der Steuerleitungsanschluß (17.3) mit dem drucklosen Vorratsbehälter (9.3) der Druckmediumversorgung (9) in Verbindung steht,

daß in der zum drucklosen Vorratsbehälter (9.3) führenden Rücklaufleitung (20.1) eines der beiden Sperrventile (z. B. 5.2) ein Durchflußsensor (19) angeordnet ist, und daß die Rücklaufleitung (20.2) des anderen der beiden Sperrventile (z. B. 5.2.1) entweder mit einem im drucklosen Vorratsbehälter (9.3) mündenden Sauganschluß (9.6) der Pumpe (9.1) der Druckmediumversorgung (9) oder mit einem ebenfalls im drucklosen Vorratsbehälter mündenden, eine Drosselstelle (9.5) aufweisenden Rücklaufleitung (9.7) eines der Pumpe (9.1) parallelgeschalteten überdruckventils (9.4) verbunden ist, und zwar zwischen Drosselstelle (9.5) und Überdruckventil (9.4).

**Claims**

1. A hydraulic brake force booster for a hydraulic motor vehicle brake system, having a booster piston (12), which is axially displaceably guided in a bore of a valve housing (11) and whose booster force can be transferred by way of a thrust rod (3) acting on the booster piston to a master brake cylinder (2) connected therebeyond, and a control member (control spool 13), which is axially displaceably mounted therein, whose relative axial displacement, which is effected by means of an actuating device (4), enables a working chamber (14) of the brake force booster (1) to be connected by way of axial and radial openings in the control member (13) and/or booster piston (12) either to a pressure line connection (17.1) opening into a pressure chamber (15) or to a return line connection (17.2) opening into a return chamber, wherein the thrust rod (3), which acts on the booster piston (12), extends axially through the return chamber, characterised in that the thrust rod (3) or the booster piston (12) is connected to an adjusting piston (18) which divides the return chamber into a first component chamber (16.1), having the return line connection (17.2), and a second component chamber (16.2), which is axially adjacent thereto and has a control line connection (17.3), and the adjusting piston (18) is formed and dimensioned in such a way that the thrust rod (3) is axially displaceable against the effect of the actuating force and the booster force if the second component chamber (16.2) is subjected by way of the control line connection (17.3) to pressure of a suitable level.

2. A hydraulic brake force booster as claimed in claim 1, characterized in that the thrust rod (3) is axially displaceable against the effect of the actuating force and the booster force if the second component chamber (16.2) is subjected, like the working chamber (14), to (servo) system pressure.

3. A hydraulic motor vehicle brake system having an anti-wheel-lock control device, having a hydraulic brake force booster (1) which is used as a pressure modulator in the anti-wheel-lock control, as claimed in claim 1 or 2, characterized in that, as desired and in accordance with the control requirements of the anti-wheel-lock control device, the control line connection (17.3) can, by means of a first valve unit (5) of the antiblock control device, either be completely closed off in order to maintain brake pressure, or be connected to a pressure source (pump 9.1, pressure accumulator 9.2) in order to reduce brake pressure, or, in order to build up pressure again, may be connected to a pressureless storage tank (9.3) for the pressure medium supply (9) to the brake force booster (1).

4. A hydraulic motor vehicle brake system as claimed in claim 3, characterised in that, when the control requires a "pressure reduction", the control line connection (17.3) can be connected to the working chamber (14) by means of the first valve unit (5).

5. A hydraulic motor vehicle brake system as claimed in claim 3 or 4, having a non-return valve (6.1 to 6.4) of a second valve unit (6) of the anti-wheel-lock control device disposed in each of the brake lines leading from the master brake cylinder (2) to the individual vehicle wheels VL, HR, VR and HL, characterized in that, if the control requires a "pressure reduction" for one part of the wheels and at the same time a "pressure build-up" for the other part of the wheels, first the non-return valves of the second valve unit (6) which are associated with said wheels can be switched into their open state until either pressure compensation is achieved or the control ceases to require "pressure reduction", and only then can the first valve unit (5) be switched over in accordance with any continuing control requirements.

6. A hydraulic motor vehicle brake system as claimed in any of claims 3 to 5, characterised in that the first valve unit (5), which is connected to the control line connection (17.3), has two non-return valves (5.2; 5.2.1), which are closed only when the control requires "pressure reduction" and are otherwise open, and by way of which the control line connection (17.3) is connected to the pressureless storage tank (9.3) of the pressure medium supply (9), a flow sensor (19) is disposed in the return line (20.1), leading to the pressureless storage tank (9.3), of one of the two non-return valves (e.g. 5.2), and the return line (20.2) of the other of the two non-return valves (e.g. 5.2.1) is connected either to a suction connection (9.6), which opens in the pressureless storage tank (9.3), of the pump (9.1) of the pressure medium supply (9), or to a return line (9.7) of an excess-pressure valve (9.4) connected in parallel with the pump (9.1), which return line also opens in the pressureless storage tank, namely between the throttle point (9.5) an the excess-pressure valve (9.4).

**Revendications**

1. Servofrein hydraulique pour le système hydraulique de freinage d'une automobile, qui comporte un piston (12) d'assistance coulissant axialement à l'intérieur d'un boîtier (11) de distributeur, dont l'effort d'assistance est transmis, par l'intermédiaire d'une tige poussoir (3), à un maître-cylindre attelé (2) de frein, et qui comporte ensuite un élément distributeur (tiroir distributeur 13) coulissant axialement dans ce piston, dont le déplacement axial relatif engendré au moyen d'un dispositif (4) de commande établit, par l'intermédiaire d'orifices de passage hydraulique axiaux et radiaux disposés dans l'élément distributeur (13) et/ou dans le piston (12) d'assistance, une communication soit entre une chambre (14) de travail du servofrein (1) et une conduite (17.1) de pression raccordée à une chambre (15) de pression, soit entre la chambre (14) de travail et une conduite (17.2) de refoulement raccordée à une chambre de refoulement, la tige poussoir (3) reliée au piston (12) d'assistance s'étendant à travers la chambre de refoulement, caractérisé par le fait qu'un servopiston (18) est relié à la tige poussoir (3) ou au piston (12) d'assistance, qui divise la chambre de refoulement en une première sous-chambre (16.1) délimitée par le piston (12) d'assistance et raccordée à la conduite (17.2) de refoulement, et en une deuxième sous-chambre (16.2) axialement adjacente, qui est raccordée à une conduite (17.3) de commande, et par le fait que le servopiston (18) est réalisé et dimensionné de telle façon que la tige poussoir (3) puisse être déplacée axialement contre l'effet des efforts de commande et d'assistance, lorsque la deuxième sous-chambre (16.2) est alimentée, par l'intermédiaire de la conduite (17.3) de commande, en fluide sous une pression suffisante.

2. Servofrein hydraulique selon la revendication 1, caractérisé par le fait que la tige poussoir (3) peut être déplacée axialement contre l'effet des efforts de commande et d'assistance, lorsque la deuxième sous-chambre (16.2) est alimentée, comme la chambre (14) de travail, en fluide sous pression du système (d'assistance).

3. Système hydraulique de freinage d'une automobile, équipé d'un dispositif régulateur antiblocage des roues, comportant un servofrein hydraulique (1) selon une des revendications 1 ou 2, travaillant, dans le cadre de la régulation antiblocage des roues, comme un modulateur de pression, caractérisé par le fait que la conduite (17.3) de commande peut, au moyen d'un premier bloc distributeur (5) du dispositif régulateur antiblocage des roues et en fonction des demandes de régulation, soit être obturée totalement - de manière à maintenir la pression de freinage - soit être reliée à une source (pompe 9.1, accumulateur 9.2) de fluide sous pression - de manière à diminuer la pression de freinage - soit être reliée à un réservoir (9.3) exempt de pression du système (9) d'alimentation en fluide sous pression du servofrein (1) - de manière à augmenter la pression de freinage.

4. Système hydraulique de freinage d'une automobile selon la revendication 3, caractérisé par le fait que la conduite (17.3) de commande peut, en cas de demande de régulation en "diminution de la pression", être reliée, par l'intermédiaire du premier bloc distributeur (5), à la chambre (14) de travail.

5. Système hydraulique de freinage d'une automobile selon une des revendications 3 et 4, comportant des valves d'arrêt (6.1 à 6.4) d'un deuxième bloc distributeur (6) du dispositif régulateur antiblocage des roues, disposées respectivement dans les conduites de frein allant du maître-cylindre (2) de frein aux différentes roues AVG, ARD, AVD et ARG du véhicule, caractérisé par le fait que, lorsqu'une partie des roues nécessite une régulation en "diminution de la pression" et que l'autre partie des roues nécessite, en même temps, une régulation en "augmentation de la pression", l'on ouvre d'abord les valves d'arrêt du deuxième bloc distributeur (6) qui correspondent à ces roues, jusqu'à ce qu'on obtienne soit un équilibrage des pressions, soit la disparition de la demande de régulation en "diminution de la pression", et que l'on ne commute le premier bloc distributeur (5), en fonction des demandes de régulation persistant éventuellement, qu'après l'obtention de ces conditions.

6. Système hydraulique de freinage d'une automobile selon une des revendications 3 à 5, caractérisé par le fait que le premier bloc distributeur (5) relié à la conduite (17.3) de commande comporte, entre autres, deux valves d'arrêt (5.2; 5.2.1) fermées seulement en cas de demande de régulation en "diminution de la pression", et ouvertes dans tous les autres cas, par l'intermédiaire desquelles la conduite (17.3) de commande est reliée au réservoir (9.3) exempt de pression du système (9) d'alimentation en fluide sous pression, et par le fait qu'un capteur (19) de débit est disposé dans la conduite (20.1) de refoulement d'une des deux valves d'arrêt (par exemple 5.2), menant au réservoir (9.3) exempt de pression, et que la conduite (20.2) de refoulement de la deuxième valve d'arrêt (par exemple 5.2.1) est raccordée soit à une tubulure (9.6) d'aspiration de la pompe (9.1) du système (9) d'alimentation en fluide sous pression, débouchant dans le réservoir (9.3) exempt de pression, soit à une conduite (9.7) de refoulement d'un clapet (9.4) limiteur de pression branché en parallèle à la pompe (9.1), cette conduite, munie d'un gicleur (9.5), débouchant également dans le réservoir exempt de pression, le raccordement de la conduite (20.2) se faisant entre le gicleur (9.5) et le clapet (9.4) limiteur de pression.

Fig.1

Fig.2

Fig.3

0 199 352

Fig.4